# EUROPÄISCHE PATENTSCHRIFT

(11) **EP 1 283 146 B1**
(45) Veröffentlichungstag und Bekanntmachung des Hinweises auf die Patenterteilung: **14.06.2006**
(21) Anmeldenummer: 02016691.4
(22) Anmeldetag: 26.07.2002
(51) Int. Cl.: B62D 1/181, B62D 1/19, B62D 1/18, B60R 21/09, B60R 25/02, B60R 25/00

(54) **Kraftfahrzeug mit in Richtung der Armaturentafel verschiebbarem Lenkrad**
Motor vehicle with a steering wheel slidable in the direction of the dashboard
Véhicule à moteur avec volant coulissant dans la direction du tableau de bord

(30) Priorität: 08.08.2001 DE 10137971
(43) Veröffentlichungstag der Anmeldung: 12.02.2003
(73) Patentinhaber: ADAM OPEL AG, 65423 Rüsselsheim (DE)
(72) Erfinder: Leopold, Frank, Dipl.-Des., 65232 Taunusstein (DE); Verhee, Patrick, Dipl.-Ing., 65428 Rüsselsheim (DE); Treser, Walter, Dipl.-Ing., 65189 Wiesbaden (DE); Verschoore, Marten, Dipl.-Des., 65185 Wiesbaden (DE); Taffin, Dominique, Dipl.-Des., 65183 Wiesbaden (DE)

(56) Entgegenhaltungen:
- EP-A- 0 802 105
- FR-A- 2 779 695
- US-A- 4 881 020
- US-A- 5 606 892
- US-A- 6 070 686

## Beschreibung

Die Erfindung betrifft ein Kraftfahrzeug mit einer Armaturentafel sowie einem im Bereich der Armaturentafel angeordneten Lenkrad mit Lenksäule, wobei Lenkrad und Lenksäule relativ zur Armaturentafel verschiebbar und das Lenkrad gegen eine Vorderfläche der Armaturentafel oder in eine Ausnehmung der Armaturentafel versenkbar ist, sowie die Armaturentafel mit einer Haube versehen ist, die oberhalb von, der Armaturentafel zugeordneten Anzeigen angeordnet ist, wie aus US-A-6070686 bekannt.

Ein derartiges Kraftfahrzeug als konzeptstudie bildet den gleichen Stand der Technik (Zeitungen "Recklinghäuser Zeitung", Sparte Produkte, Seite 12, Ausgabe vom 11. November 2000, "Mainzer-Rhein-Zeitung", Sparte Politik/Wirtschaft/Industrie, Seite 2, Ausgabe vom 30. November 2000). Bei diesem Fahrzeug ist ein Bügeltürgriff vorgesehen, wobei durch Ziehen an diesem Griff ein automatisches Schwenken der Sitze des Fahrzeuges in Richtung der Türöffnungen erfolgt. Das Lenkrad ist in dieser Phase in die Armaturentafel versenkt und ermöglicht dadurch einen besonders bequemen Einstieg. Hat der Fahrer seinen Sitz wieder nach vorne gedreht, fährt das Lenkrad auf Knopfdruck heran und gibt den Blick auf die Anzeigen bzw. das Display dahinter frei. Dort werden Informationen über das Fahrzeug und Routenhinweise des Navigationssystems angezeigt. Bei diesem Fahrzeug handelt es sich um eine Konzeptstudie.

Aus der DE 37 25 908 A1 ist ein Kraftfahrzeug mit einem sperrbaren Lenkrad bekannt. Die Lenksäule ist in ihrem oberen Bereich abknickbar und das Lenkrad mittels der oberhalb der Armaturentafel angeordneten, verschwenkbaren Haube mit einer einen Teil des Lenkrades aufnehmenden Vorrichtung arretierbar. Die Haube ist dabei mittels eines Schlosses in ihrer abgesenkten Sperrstellung festlegbar.

In der DE 2 045 960 A ist eine Sicherheitsarmaturentafel beschrieben. Diese ist entweder über ihre ganze Breite oder nur auf der Fahrerseite bis in den Bereich der Lenkradebene vorgezogen und weist im Bereich des Lenkradkranzes eine so große Aussparung auf, wie sie für ein ungehindertes Lenken erforderlich ist.

Aus der EP 0 179 475 B1 ist es bekannt, aus Komfortgründen nicht nur die Lenksäule und damit das Lenkrad in seiner Neigung einstellen zu können, sondern die Bewegung der Lenksäule mit einer Bewegung einer Instrumentenanordnung zu koppeln. Beim Kippen der Lenksäule kippt damit die Instrumentenanordnung.

In der DE 199 16 091 A1 ist eine Vorrichtung zum Erleichtern des Ein- bzw. Aussteigens in ein bzw. aus einem Fahrzeug beschrieben. Die Vorrichtung ermöglicht ein Verstellen des Lenkrades und des Fahrersitzes durch im Wesentlichen gleichzeitig auslösbare Antriebseinrichtungen. Der Fahrersitz wird in eine hintere Sitzposition und das Lenkrad vom Fahrer weg bewegt.

Weitere Vorrichtungen zum Verstellen von Lenkrädern und Armaturentafeln sind aus der DE 38 07 848 C2, EP 0 230 258 A2 und EP 0 857 118 B1 bekannt.

Es ist Aufgabe der vorliegenden Erfindung, ein Kraftfahrzeug der eingangs genannten Art so weiter zu bilden, dass dieses sich durch einen besondern Komfort für den Fahrer in geparktem Zustand des Kraftfahrzeuges sowie durch eine optimale Funktionalität der Armaturentafel auszeichnet.

Gelöst wird die Aufgabe bei einem Kraftfahrzeug der eingangs genannten Art dadurch, dass das Lenkrad im Bereich der Anzeigen gegen die Armaturentafel oder in die Ausnehmung der Armaturentafel versenkbar ist und die Haube schwenkbar in der Armaturentafel gelagert ist, wobei die Haube mit ihrem dem Fahrzeugheck zugewandten Ende in Richtung des versenkten Lenkrades abklappbar ist.

Das erfindungsgemäße Kraftfahrzeug ermöglicht es, den elektrischen Verstellbereich einer konventionellen Lenkradverstellung um eine spezielle, der Armaturentafel angepasste Position zu erweitern, die es gestattet, den gesamten Einstiegsbereich von störenden Baugruppen zu befreien. Es wird eine zusätzliche Mechanik installiert, die das Lenkrad mit seinen vorzugsweise dahinter befindlichen Bedienelementen bis direkt vor die Armaturentafelvorderfläche oder darüber hinaus bis in die Armaturentafel hineinbewegt, so dass das Lenkrad oder ein Fragment des Lenkrades bei abgestelltem Fahrzeug die sonst nötige Aussparung formschlüssig verschließt. Die Anzeigen sind damit nicht mehr einsehbar. Bei diesen Anzeigen handelt es sich vorzugsweise um die im Hauptblickfeld des Fahrers angeordneten Hauptinstrumente des Fahrzeuges oder einen Bildschirm, der der Wiedergabe einer Vielzahl von Informationen für den Fahrer dient. Idealerweise werden durch das nach vorn verfahren des Lenkrades auch andere, nur beim Fahrbetrieb notwendige Funktionen, wie Luftausströmdüsen und Luftausströmregler, Wahlschalter für Automatikgetriebe und Lichtschalter abgedeckt, so dass sich ein besonders klares und aufgeräumtes Erscheinungsbild des Cockpits ergibt. Die Haube, auch Instrumentenhutze genannt, ist so auf die Form des Lenkrades abgestimmt, dass aus Lenkrad, oder bei Verwendung eines Fragmentes, aus Fragment und Haube eine aufeinander abgestimmte Form entsteht, die das Instrument bzw. Instrumente oder den dort installierten Bildschirm komplett abdeckt. Durch bestimmte, dem Fahrbetrieb zugeordnete Funktionen, wie Zündung ein, Blick in den Rückspiegel (beispielsweise über die Detektion einer Kamera), das Lenkrad berühren (beispielsweise durch in das Lenkrad integrierte Sensoren), durch Auslösen eines Kontaktes durch Betätigen eines Schalters oder durch Sprachsteuerung kann vom Benutzer die Fahrposition oder die Parkposition des Lenkrades herbeigeführt werden.

Vorzugsweise wird beim Einfahren des Lenkrades eine Geradstellung zumindest des Lenkrades, wenn nicht auch der Räder, über einen elektrischen, hydraulischen oder elektrohydraulischen Antrieb herbeigeführt. Dies erfolgt idealerweise durch eine Hilfskraftlenkung. Bei rein elektrischen Systemen ergibt sich ein Systemvorteil.

Ein zusätzlicher Diebstahlschutz kann durch die Schließung der Armaturentafel gegeben sein, wie auch ein Schutz vor Sonnenbestrahlung empfindlicher Bauteile (z. B. des Bildschirmes oder der Elektronik) oder vor übermäßigem Aufheizen des Lenkrades und seiner Peripherie.

Das wegfahrende Lenkrad kann durchaus über eine Crashsensorik und einen von dieser angesteuerten Antrieb eingezogen werden, um so eine homogene Aufprallfläche für den Fahrer bzw. eine homogene Abstützfläche für den Airbag zu bilden. Insbesondere wenn das Lenkrad in Art eines ovalen Lenkradfragments ausgebildet ist, bei dem der obere Teil des Lenkradkranzes fehlt, besteht die Möglichkeit, einen Fullsize-Beifahrer-Airbag auch auf der Fahrerseite hinter dem Instrument zu positionieren, um eine größere Aufprallfläche als bisher zu erreichen und ein seitliches Abrutschen des Fahrers vom Airbag bei Kollisionen, die unter einem Winkel stattfinden, zu eliminieren. Auch das Bergen von Insassen nach dem Crash wäre weniger behindert als bei konventionell ausgeführten Fahrzeugen.

Es wird als besonders vorteilhaft angesehen, wenn die Einfahrbewegung des Lenkrades und eine Schwenkbewegung des Fahrersitzes in Richtung der Fahrertür des Kraftfahrzeuges, und umgekehrt, gekoppelt sind.

Die beschriebene Ausgestaltung des Kraftfahrzeuges ermöglicht eine erhebliche Komfortverbesserung beim Ein- und Aussteigen. Der Einstiegsbereich zum Fahrersitz ist frei und es werden die zum Fahren benötigten Bauteile nur dann ausgefahren bzw. zugänglich gemacht, wenn das Fahrzeug in Bewegung gesetzt werden soll. Die Einstiegsverhältnisse auf der Fahrerseite kommen annähernd denen auf der Beifahrerseite gleich. Visuell wird ein völlig neues Raumgefühl erzeugt und es offeriert ein erfindungsgemäß ausgestattetes Fahrzeug in geparktem Zustand erheblich mehr Bewegungsfreiheit, beispielsweise bei Tätigkeiten vom Fahrersitz aus. Zusätzlich ist das auf den Fahrer zufahrende Lenkrad eine Geste zur Benutzerführung und stellt einen aktiven Part im System Mensch-Fahrzeug dar, der eine nicht zu unterschätzende psychologische Funktion bietet.

Weitere Merkmale der Erfindung sind in den Unteransprüchen, der Beschreibung der Figuren sowie den Figuren selbst dargestellt.

In den Figuren ist die Erfindung vereinfacht anhand eines Ausführungsbeispieles dargestellt, ohne hierauf beschränkt zu sein. Es zeigt:
- Fig. 1: eine räumliche Ansicht eines Kraftfahrzeuges im Bereich dessen Armaturentafel und ausgefahrenem Lenkrad sowie hochgeklappter Haube,
- Fig. 2: eine Seitenansicht der Armaturentafel mit eingefahrenem Lenkrad und abgeklappter Haube,
- Fig. 3: ein konstruktives Detail des Mechanismus zum Bewegen der Haube,
- Fig. 4: ein konstruktives Detail zur Veranschaulichung der Position von Haube, Bildschirm und Lenksäule, in der Fahrposition, veranschaulicht in einer räumlichen Darstellung,
- Fig. 5: das Detail gemäß Fig. 4 veranschaulicht in einer Seitenansicht,
- Fig. 6: das Detail gemäß Fig. 4, ohne Haube,
- Fig. 7: das Detail in Fig. 5, ohne Haube,
- Fig. 8 bis 11: den Fig. 4 bis 7 entsprechende Darstellungen, allerdings in der Parkposition des Lenkrades, der verschwenkten Position des Bildschirms und, in den Fig. 8 und 9 gezeigt, der abgeklappten Haube.

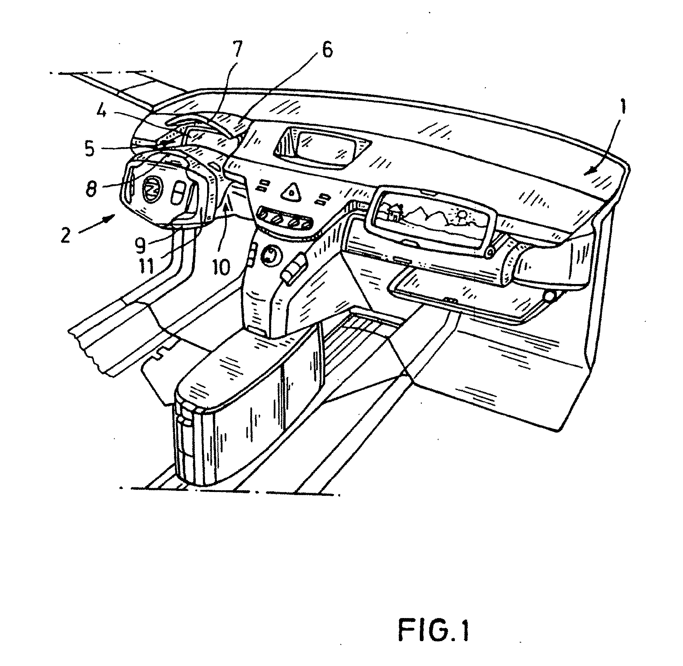

Figur 1 zeigt bei dem erfindungsgemäßen Kraftfahrzeug einen Blick in den Innenraum des Fahrzeuges, im Wesentlichen aus der Sicht des Beifahrers gesehen. Gezeigt ist eine sich über die Breite des Innenraumes erstreckende Armaturentafel 1 sowie ein im Bereich der Armaturentafel 1 angeordnetes Lenkrad 2. Die Armaturentafel 1 dient der Aufnahme einer Vielzahl von Anzeigen bzw. Instrumenten. Für die vorliegende Erfindung von Bedeutung sind die zentralen, in der Hauptblickrichtung angeordneten Anzeigen oberhalb des Lenkrads 2, die in einem Bildschirm 4 integriert sind. Bei diesen Anzeigen handelt es sich insbesondere um die Geschwindigkeitsanzeige, Drehzahlanzeige, Anzeigen betreffend Kenngrößen des Motors, wie Öl- und Kühlwassertemperatur, ferner allgemeine Betriebsanzeigen. Im Fahrzustand ist der Bildschirm 4 mit seinem oberen Bereich geringfügig relativ zur Vertikalen nach vorne geneigt, so dass der Fahrer frontal auf den Bildschirm 4 schaut. Der Bildschirm 4 ist im Bereich einer Aussparung 5 der Armaturentafel 1 angeordnet, die im Bereich ihrer dem Fahrer abgewandten Begrenzung schwenkbar eine Haube 6 aufnimmt. Deren dem Fahrer zugewandte Stirnkante 7 weist eine flach geneigte Dachkontur auf, entsprechend der oberen Kontur des im Wesentlichen oval ausgebildeten Lenkrades 2, das sich somit als Lenkradfragment darstellt. Bezogen auf die Geradeausstellung des Lenkrades 2 stellt sich dieses derart dar, dass die Hauptachse des ovalen Lenkradfragments im Wesentlichen horizontal angeordnet ist. Die seitlichen Bereiches Lenkrades 2 verlaufen in dessen Geradeausstellung, d. h. neutraler Lenkstellung, im wesentlich parallel und im Wesentlichen vertikal, während die untere Kontur 9 des Lenkrades 2 bezüglich der Horizontalen im Wesentlichen gespiegelt zur oberen Kontur 8 des Lenkrades 2 verläuft. Die Kinematik des Lenkrades 2 ist so gewählt, dass es aus der in Figur 1 gezeigten neutralen Stellung maximal um einen Winkel von jeweils etwa 100° nach rechts oder links geschwenkt werden kann.

Wie der Darstellung der Figur 1 zu entnehmen ist, verbleibt zwischen dem in ausgefahrener Position befindlichem Lenkrad 2 und der Haube 6 ausreichend Platz, um den Bildschirm 4 einsehen zu können.

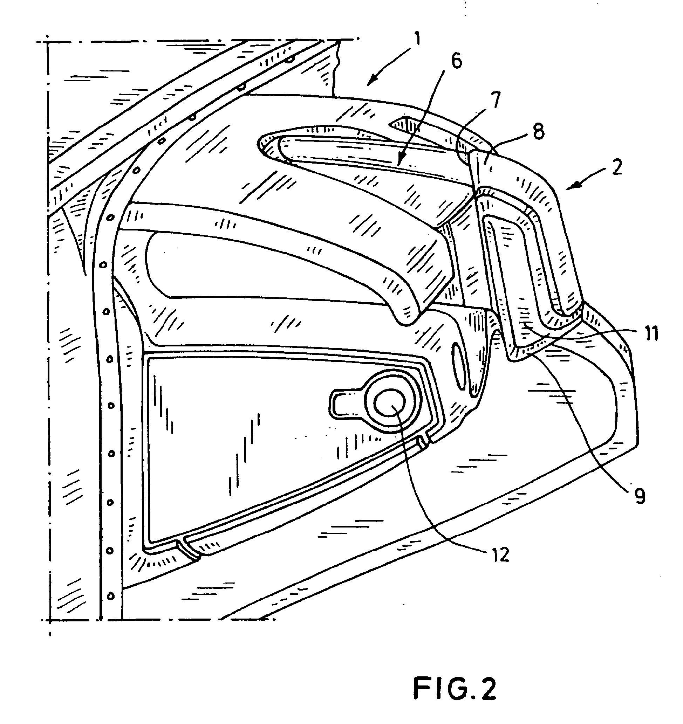

Figur 2 veranschaulicht den erfindungsrelevanten Bereich des Fahrzeuges bei eingefahrenem Lenkrad 2 und abgeklappter Haube 6. In diesem Zustand ist auch der Bildschirm 4 weiter in die Armaturentafel 1 eingeschwenkt. Dies ist allerdings in der Figur 2 nicht zu ersehen.

Die Figur 2 zeigt, dass das Lenkrad 2 in die Ausnehmung 10 der Armaturentafel 1 verschoben ist, so dass nur der Lenkradkranz 11 vor der Armaturentafel 1 positioniert ist. Die Haube 6 ist mit ihrem dem Fahrzeugheck bzw. bzw. dem Fahrer zugewandten Ende in Richtung des versenkten Lenkrades 2, konkret des Lenkradkranzes 11 abgeklappt und liegt mit ihrer Stirnkante 7 am Lenkradkranz 11 an. Die obere Kontur 8 des Lenkradkranzes 11 und die obere zentrale Kontur der Haube 6 bilden damit ineinander übergehende Flächen. In dieser Position von Lenkrad 2 und Haube 6 sowie Bildschirm 4 sind die Anzeigen des Bildschirmes 4 nicht einsehbar und es sind auch funktionelle Elemente des Fahrzeuges im Bereich des Bildschirmes nicht zugänglich.

Die Armaturentafel 1 weist auf ihrer der Fahrertür zugewandten Seite einen Schalter 12 zum Überführen der vorbezeichneten Elemente von der Fahrposition in die Parkposition auf.

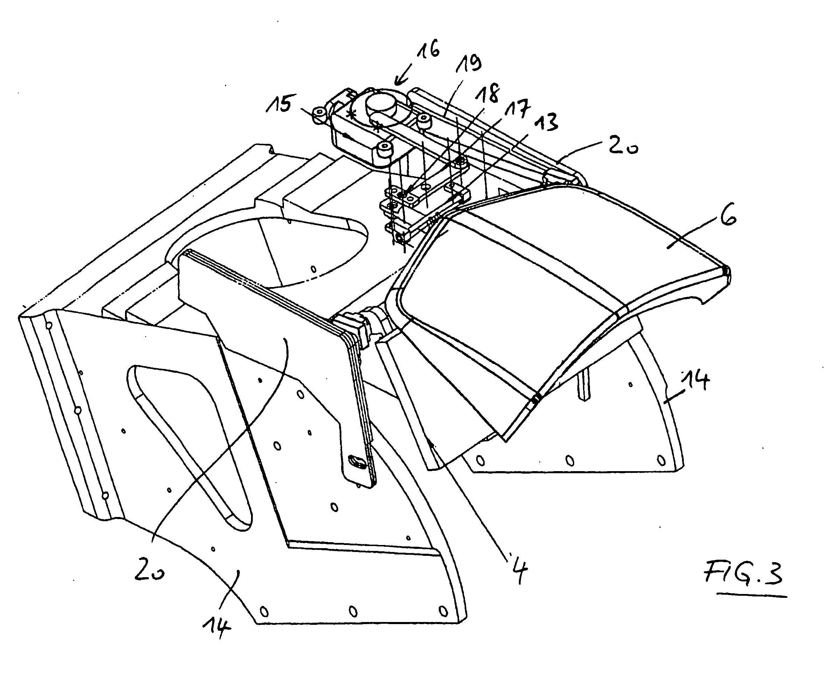

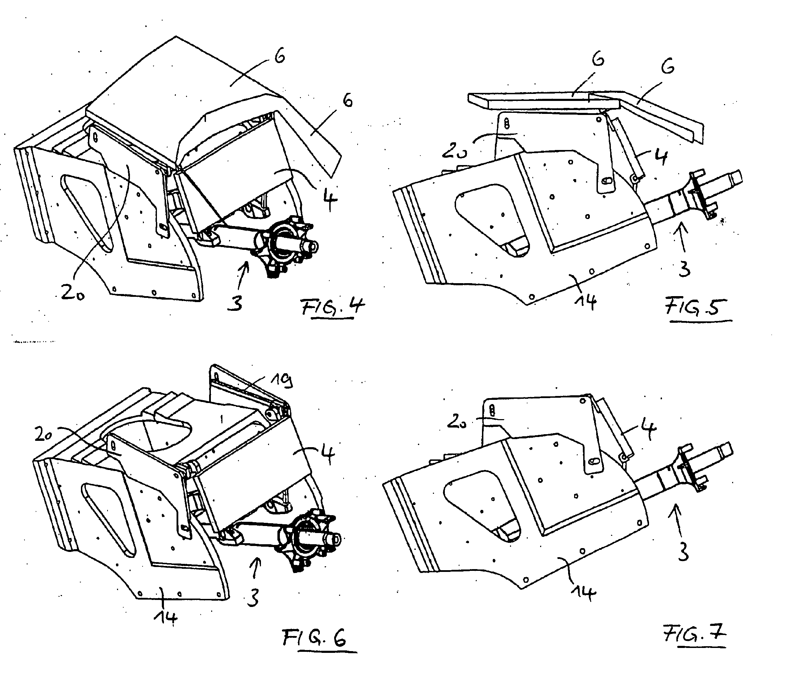

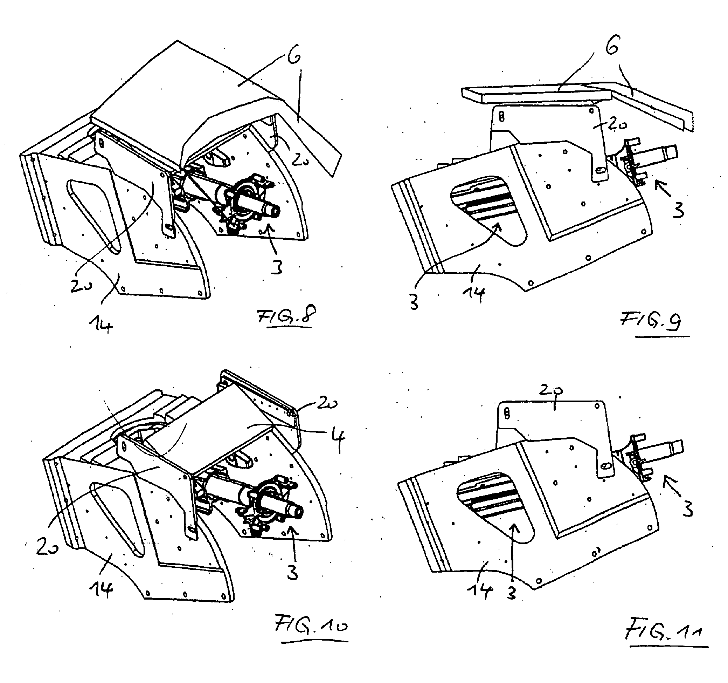

Figur 3 veranschaulicht die Ansteuerung der in einer Drehachse 13 schwenkbar gelagerten Haube 6. Über einen in seitlichen Armaturenbrettträgern 14 gelagerten Elektromotor 15 wird mittels eines dem Elektromotor 15 zugeordneten Exzenters 16 ein Hebelarm 17 verschwenkt, der mittels einer Übersetzungsachse 18 die Drehachse 13 schwenkt. In Schienen 19 weiterer seitlicher Träger 20 des Armaturenbrettes 1 ist der Bildschirm 4 seitlich geführt. Ein nicht gezeigter Elektromotor dient dem Verfahren des Bildschirmes 4 von der Fahrposition in die Parkposition, wie es insbesondere den Figuren 6 und 10 zu entnehmen ist. Diesen Figuren und auch den Figuren 7 und 11 ist anschaulich die Fahr- und Parkposition der das Lenkrad 2 tragenden Lenksäule 3 zu entnehmen. Die Figuren 4 und 5 sowie 8 und 9 zeigen für die Fahr- bzw. Parkposition entsprechende Darstellungen, bei denen die Position der Haube 6 zusätzlich veranschaulicht ist.

Den Figuren 4 bis 11 ist zu entnehmen, dass die Lenksäule 3 in der Fahrstellung wesentlich stärker bezüglich der Horizontalen, bezogen auf deren lenkradseitiges Ende, geneigt ist, als in der Parkposition. Beim Überführen in die Parkposition wird die Lenksäule 3 weiter in die Armaturentafel 1 hineinbewegt und stärker einer Horizontalen angenähert. Auch der Bildschirm 4 nimmt in der Parkposition eine flachere, somit stärker der Horizontalen angenäherte Position ein und ist weiter in die Armaturentafel 1 hineinbewegt. Diese Positionen von Lenksäule 3 und Bildschirm 4 ermöglichen es, die Haube 6 abzuklappen.

### Bezugszeichen1iste

- Armaturentafel: 1
- Lenkrad: 2
- Lenksäule: 3
- zentrale Anzeige/Bildschirm: 4
- Aussparung: 5
- Haube: 6
- Stirnkante: 7
- obere Kontur: 8
- untere Kontur: 9
- Ausnehmung: 10
- Lenkradkranz: 11
- Schalter: 12
- Drehachse: 13
- Armaturenbrettträger: 14
- Elektromotor: 15
- Exzenter: 16
- Hebelarm: 17
- Übersetzungsachse: 18
- Schiene: 19
- seitlicher Träger: 20

## Patentansprüche

1. Kraftfahrzeug mit einer Armaturentafel (1) sowie einem im Bereich der Armaturentafel (1) angeordneten Lenkrad (2) mit Lenksäule (3), wobei Lenkrad (2) und Lenksäule (3) relativ zur Armaturentafel (1) verschiebbar und das Lenkrad (2) gegen eine Vorderfläche der Armaturentafel (1) oder in eine Ausnehmung (10) der Armaturentafel (1) versenkbar ist, sowie die Armaturentafel (1) mit einer Haube (6) versehen ist, die oberhalb von, der Armaturentafel (1) zugeordneten Anzeigen (4) angeordnet ist, **dadurch gekennzeichnet, dass** das Lenkrad (2) im Bereich der Anzeigen (4) gegen die Armaturentafel (1) oder in die Ausnehmung (10) der Armaturentafel (1) versenkbar ist und die Haube (6) schwenkbar in der Armaturentafel (1) gelagert ist, wobei die Haube (6) mit ihrem dem Fahrzeugheck zugewandten Ende in Richtung des versenkten Lenkrades (2) abklappbar ist.

2. Kraftfahrzeug nach Anspruch 1, **dadurch gekennzeichnet, dass** die Anzeigen (4) Bestandteil von Instrumenten oder eines Bildschirmes bilden.

3. Kraftfahrzeug nach Anspruch 1 oder 2, **dadurch gekennzeichnet, dass** die Kontur der Haube (6) der Lenkradkontur, insbesondere der Kontur des Lenkradkranzes (11) angepasst ist.

4. Kraftfahrzeug nach einem der Ansprüche 1 bis 3, **dadurch gekennzeichnet, dass** die abgeklappte Haube (6) mit ihrem Ende am Lenkrad (2), insbesondere dem Lenkradkranz (11) anliegt.

5. Kraftfahrzeug nach einem der Ansprüche 1 bis 4, **dadurch gekennzeichnet, dass** das Lenkrad (2), bezogen auf seine neutrale Lenkstellung, eine obere Kontur (8) aufweist, die der Kontur (7) der Haube (6) angepasst ist.

6. Kraftfahrzeug nach einem der Ansprüche 1 bis 5, **dadurch gekennzeichnet, dass** das Lenkrad (2) in Art eines Lenkradfragmentes, insbesondere im Wesentlichen ovalen Lenkradfragmentes ausgebildet ist.

7. Kraftfahrzeug nach Anspruch 6, **dadurch gekennzeichnet, dass** die Hauptachse des ovalen Lenkradfragments in der neutralen Lenkstellung des Lenkrads (2) horizontal angeordnet ist.

8. Kraftfahrzeug nach einem der Ansprüche 1 bis 7, **dadurch gekennzeichnet, dass** ein elektrischer Antrieb (15) zum Ein- und Ausklappen der Haube (6) vorgesehen ist.

9. Kraftfahrzeug nach einem der Ansprüche 1 bis 8, **dadurch gekennzeichnet, dass** ein Antrieb vorgesehen ist, insbesondere ein elektrischer Antrieb, der beim Einfahren des Lenkrades (2) die Anzeigen (4) unter die Haube (6) bewegt, insbesondere einen Bildschirm in eine im Wesentlichen flachliegende Stellung unter die Haube (6) verschwenkt.

10. Kraftfahrzeug nach einem der Ansprüche 1 bis 9, **dadurch gekennzeichnet, dass** ein Antrieb, insbesondere ein elektrischer Antrieb vorgesehen ist, der beim Einfahren des Lenkrades (2) dieses in seine neutrale Lenkstellung überführt.

11. Kraftfahrzeug nach einem der Ansprüche 1 bis 10, **dadurch gekennzeichnet, dass** das Lenkrad (2) um einen Winkel von jeweils etwa 100° aus der neutralen Lenkstellung in seine Lenkrichtungen drehbar ist.

12. Kraftfahrzeug nach einem der Ansprüche 1 bis 11, **dadurch gekennzeichnet, dass** ein Mechanismus zum Verriegeln von Lenkrad (2) und/oder Haube (6) in deren eingefahrenen bzw. abgeklappten Stellung vorgesehen ist.

13. Kraftfahrzeug nach einem der Ansprüche 1 bis 12, **dadurch gekennzeichnet, dass** eine Crashsensorik vorgesehen ist, die im Crashfall den Antrieb des Lenkrads (2) zwecks Einfahren des Lenkrades (2) ansteuert.

14. Kraftfahrzeug nach einem der Ansprüche 1 bis 13, **dadurch gekennzeichnet, dass** die Einfahrbewegung des Lenkrades (2) und die Schwenkbewegung des Fahrersitzes in Richtung der Fahrertür des Kraftfahrzeuges und umgekehrt gekoppelt sind.

## Claims

1. Motor vehicle with an instrument panel (1) and also a steering wheel (2) arranged in the region of the instrument panel (1) and having a steering column (3), wherein the steering wheel (2) and steering column (3) are displaceable relative to the instrument panel (1) and the steering wheel (2) can be lowered towards a front face of the instrument panel (1) or into a recess (10) of the instrument panel (1), and also the instrument panel (1) is provided with a cowl (6), which is arranged above displays (4) associated with the instrument panel (1), **characterised in that** the steering wheel (2) can be lowered in the region of the displays (4) towards the instrument panel (1) or into the recess (10) of the instrument panel (1) and the cowl (6) is pivotally mounted in the instrument panel (1), wherein at its end facing the rear of the vehicle, the cowl (6) can be folded down towards the lowered steering wheel (2).

2. Motor vehicle according to Claim 1, **characterised in that** the displays (4) form a component of instruments or of a screen.

3. Motor vehicle according to Claim 1 or 2, **characterised in that** the contour of the cowl (6) is adapted to the steering wheel contour, in particular the contour of the steering wheel rim (11).

4. Motor vehicle according to one of Claims 1 to 3, **characterised in that** the folded-down cowl (6) rests with its end on the steering wheel (2), in particular the steering wheel rim (11).

5. Motor vehicle according to one of Claims 1 to 4, **characterised in that** in relation to its neutral steering position, the steering wheel (2) has an upper contour (8), which is adapted to the contour (7) of the cowl (6).

6. Motor vehicle according to one of Claims 1 to 5, **characterised in that** the steering wheel (2) is configured in the manner of a steering wheel segment, in particular a substantially oval steering wheel segment.

7. Motor vehicle according to Claim 6, **characterised in that** the main axis of the oval steering wheel segment is arranged horizontally in the neutral steering position of the steering wheel (2).

8. Motor vehicle according to one of Claims 1 to 7, **characterised in that** an electric drive (15) is provided for folding the cowl (6) in and out.

9. Motor vehicle according to one of Claims 1 to 8, **characterised in that** a drive is provided, in particular an electric drive, which upon retraction of the steering wheel (2), moves the displays (4) under the cowl (6), in particular pivots a screen under the cowl (6) into a substantially flat position.

10. Motor vehicle according to one of Claims 1 to 9, **characterised in that** a drive, in particular an electric drive, is provided, which upon retraction of the steering wheel (2), moves this into its neutral steering position.

11. Motor vehicle according to one of Claims 1 to 10, **characterised in that** the steering wheel (2) is rotatable out of the neutral steering position by an angle of about 100° in each of its steering directions.

12. Motor vehicle according to one of Claims 1 to 11, **characterised in that** a mechanism is provided for locking the steering wheel (2) and/or cowl (6) in their retracted or folded-down position.

13. Motor vehicle according to one of Claims 1 to 12, **characterised in that** a crash sensor system is provided, which in the case of a crash actuates the drive of the steering wheel (2) for the purpose of retracting the steering wheel (2).

14. Motor vehicle according to one of Claims 1 to 13, **characterised in that** the retraction movement of the steering wheel (2) and the rotational movement of the driver's seat in the direction of the driver's door of the motor vehicle and vice versa are coupled.

## Revendications

1. Véhicule automobile, ayant un tableau de bord (1) ainsi que, disposé dans la zone du tableau de bord (1), un volant (2) avec une colonne de direction (3), le volant (2) et la colonne de direction (3) étant déplaçables par rapport au tableau de bord (1), et le volant (2) étant escamotable vers une face avant du tableau de bord (1) ou dans un creux (10) du tableau de bord (1), et le tableau de bord (1) étant pourvu d'un capot (6) qui est disposé au-dessus de voyants (4) associés au tableau de bord (1), **caractérisé en ce que** le volant (2) est escamotable dans la zone des voyants (4), vers le tableau de bord (1) ou dans le creux (10) du tableau de bord (1), et le capot (6) est logé dans le tableau de bord (1) tout en pouvant pivoter, le capot (6) étant rabattable vers le bas avec son côté tourné vers l'arrière du véhicule, dans la direction du volant escamoté (2).

2. Véhicule automobile selon la revendication 1, **caractérisé en ce que** les voyants (4) forment des constituants d'instruments ou d'un écran.

3. Véhicule automobile selon la revendication 1 ou 2, **caractérisé en ce que** le contour du capot (6) est adapté au contour du volant, en particulier au contour de la couronne du volant (11).

4. Véhicule automobile selon l'une des revendications 1 à 3, **caractérisé en ce que** le capot rabattu vers le bas (6) est adjacent en son extrémité au volant (2), en particulier à la couronne de volant (11).

5. Véhicule automobile selon l'une des revendications 1 à 4, **caractérisé en ce que** le volant (2) présente, en considérant sa position de guidage neutre, un contour supérieur (8) qui est adapté au contour (7) du capot (6).

6. Véhicule automobile selon l'une des revendications 1 à 5, **caractérisé en ce que** le volant (2) est réalisé sous forme de fragment de volant, en particulier sous forme de fragment de volant essentiellement ovale.

7. Véhicule automobile selon la revendication 6, **caractérisé en ce que** l'axe principal du fragment de volant est disposé horizontalement dans la position de guidage neutre du volant (2).

8. Véhicule automobile selon l'une des revendications 1 à 7, **caractérisé en ce qu'**un entraînement électrique (15) est prévu pour rabattre le capot (6) vers l'intérieur ou l'extérieur.

9. Véhicule automobile selon l'une des revendications 1 à 8, **caractérisé en ce qu'**un entraînement est prévu, en particulier un entraînement électrique qui déplace les voyants (4) sous le capot (6) lors de la rentrée du volant (2), et escamote en particulier un écran dans une position se trouvant essentiellement à plat sous le capot (6).

10. Véhicule automobile selon l'une des revendications 1 à 9, **caractérisé en ce qu'**il est prévu un entraînement, en particulier un entraînement électrique, qui, lors de la rentrée du volant (2), fait passer celui-ci dans sa position de guidage neutre.

11. Véhicule automobile selon l'une des revendications 1 à 10, **caractérisé en ce que** le volant (2) peut tourner à chaque fois d'un angle d'environ 100° par rapport à la position de guidage neutre, dans ses directions de guidage.

12. Véhicule automobile selon l'une des revendications 1 à 11, **caractérisé en ce qu'**un mécanisme de verrouillage du volant (2) et/ou du capot (6) dans sa position rentrée ou rabattue vers le bas, est prévu.

13. Véhicule automobile selon l'une des revendications 1 à 12, **caractérisé en ce qu'**il est prévu un système de détection de collision, qui commande l'entraînement du volant (2) en cas de collision, en vue de rentrer le volant (2).

14. Véhicule automobile selon l'une des revendications 1 à 13, **caractérisé en ce que** sont couplés le mouvement de rentrée du volant (2) et le mouvement de pivotement du siège du conducteur dans la direction de la porte du conducteur du véhicule automobile, et inversement.
